# FASCICULE DE BREVET EUROPEEN

(11) **EP 1 684 997 B1**
(45) Date de publication et mention de la délivrance du brevet: **02.05.2007**
(21) Numéro de dépôt: 04797646.9
(22) Date de dépôt: 05.11.2004
(51) Int. Cl.: B60C 23/04

(54) **DISPOSITIF DE FIXATION D'UN MODULE SUR LA SURFACE D'UN PNEUMATIQUE**
BEFESTIGUNGSVORRICHTUNG FÜR EIN MODUL AN DER FLÄCHE EINES REIFENS
FIXING DEVICE FOR A MODULE ON THE SURFACE OF A TYRE

(30) Priorité: 05.11.2003 FR 0313081
(43) Date de publication de la demande: 02.08.2006
(73) Titulaire: Société de Technologie Michelin, 63000 Clermont-Ferrand (FR); MICHELIN Recherche et Technique S.A., 1763 Granges-Paccot (CH)
(72) Inventeur: DURIF, Pierre, F-63530 Enval (FR)
(74) Mandataire: Dequire, Philippe Jean-Marie Denis
(86) Numéro de dépôt international: PCT/EP2004/012533
(87) Numéro de publication internationale: WO 2005/044600

(56) Documents cités:
- EP-A- 1 356 961
- US-B1- 6 462 650
- PATENT ABSTRACTS OF JAPAN vol. 1999, no. 03, 31 mars 1999 (1999-03-31) & JP 10 315720 A (YOKOHAMA RUBBER CO LTD:THE), 2 décembre 1998 (1998-12-02)

## Description

L'invention décrit un dispositif permettant de fixer de manière amovible sur la surface d'un pneumatique un module comprenant généralement des éléments électroniques.

L'usage de modules électroniques dans les pneumatiques permet une multitude d'applications consistant à acquérir, stocker et transmettre des informations dans le but de suivre la fabrication ou la logistique, et plus généralement de renseigner l'usager sur l'évolution des performances du pneumatique pendant toute sa durée de vie.

Ce module électronique peut comprendre des composants passifs tels des puces d'identification ou RFID, et/ou des composants actifs reliés à un système autonome d'alimentation en énergie électrique tel que des batteries ou encore un système à couplage inductif, et dont l'objet ne fait pas partie de l'invention. Les modules sont conçus de manière à échanger les informations désirées avec des modules externes, servant d'interface avec l'usager, par l'intermédiaire d'ondes radio dont la fréquence et la puissance sont soigneusement ajustées et selon des protocoles de transmission spécifiques. Les modules sont généralement disposés à l'intérieur de boîtiers de protection souples ou rigides, destinés à préserver les composants électroniques des agressions liées aux chocs, et à l'ambiance régnant dans le pneumatique et son environnement.

Le module, placé à titre d'exemple à l'intérieur de la cavité formée par le pneumatique une fois monté sur la roue, peut être disposé sur un grand nombre de supports. Ainsi il peut être fixé à la valve, fixé sur la jante, fixé ou collé sur la paroi intérieure de l'enveloppe ou encore intégré aux composants du pneumatique. Le choix d'une de ces solutions dépend de la nature du pneumatique et des sollicitations qu'il peut endurer, de la nature de la source d'énergie du module électronique, des informations que l'on désire suivre et de l'accessibilité souhaitée en cas de maintenance.

Une des difficultés que doit résoudre l'homme de l'art en charge de ces problèmes, concerne la maîtrise des interférences possibles entre les ondes radio et les composants de la roue ou du pneumatique. Ce problème s'avère particulièrement difficile à résoudre lorsqu'il s'agit de disposer un de ces modules électroniques à l'intérieur d'un pneumatique comportant des nappes de renfort carcasse métalliques.

La solution consiste dans ce dernier cas à disposer le module le plus près possible de la paroi du pneumatique tout en tenant compte de la flexibilité du pneumatique et de la relative rigidité du module, de la résistance aux chocs, de la possibilité de démontage du module pour en assurer la maintenance, et de la nécessité d'assurer le maintien en position du module quelle que soient la vitesse de rotation et les conditions d'usage de l'enveloppe.

Des solutions de fixation permettant de répondre à ces exigences sont décrites par exemple dans la publication EP 0 936 089, US 6 255 940, JP 10 315 720 ou encore US 6 462 650, qui décrivent des systèmes de fixation d'un module sur la paroi intérieure d'un pneumatique. Ces dispositifs sont composés d'une semelle souple dont une face sert de liaison avec la paroi intérieure du pneumatique et dont l'autre face comporte un moyen de fixation coopérant avec les moyens d'attache disposés sur le module.

Toutefois, chacune des solutions proposées dans les publications citées en référence concerne des dispositifs pour lesquels l'embase servant de liaison entre la paroi intérieure du pneumatique et le module proprement dit est relativement volumineuse et comporte en particulier des moyens de liaisons avec le module proéminents.

Cette dernière caractéristique est particulièrement gênante lorsqu'il est nécessaire de procéder au rechapage à chaud du pneumatique, dans la mesure où cette embase et les moyens de liaison avec le module qu'elle comporte, risquent de détériorer la paroi des membranes de cuisson utilisées pour cette opération. A cette gêne s'ajoute la modification locale des échanges thermiques.

Il devient alors nécessaire d'enlever cette embase en la meulant, préalablement à l'étape de vulcanisation et, compte tenu du caractère destructif de l'opération de meulage, de remplacer l'embase à l'issue des opérations de vulcanisation.

L'invention a pour objet de réduire les difficultés exposées ci-dessus en proposant un ensemble comportant une embase fixée sur la paroi interne d'un pneumatique et un module amovible maintenu par ladite embase. Les caractéristiques de l'embase sont spécialement adaptées pour ne pas perturber la réalisation des opérations de rechapage à chaud des enveloppes.

Plus particulièrement, l'invention concerne un ensemble composé d'un module amovible et d'une embase de fixation, destiné à être fixé sur la surface d'un pneumatique dans lequel :
- l'embase de fixation comprend une semelle ayant une face d'assemblage destinée à être liée de manière permanente à la surface du pneumatique et une face d'appui (102), et des moyens de maintien dudit module ; et
- le module comprend au moins un composant électronique et un boîtier dans lequel ledit composant est au moins partiellement engagé.

Cet ensemble est caractérisé en ce que les moyens de maintien comprennent une lanière élastique, située en regard de la face d'appui de la semelle, et liée à ladite semelle par deux extrémités opposées de son contour ; et en ce que la forme et les dimensions du boîtier, de la semelle et de la lanière sont prévues de façon à permettre le placement du boîtier selon au moins une position de maintien dans laquelle le boîtier est, dans des conditions normales de fonctionnement du pneumatique, maintenu entre la lanière et la face d'appui de la semelle par des efforts de rappel élastique développés par la lanière élastique.

La forme du boîtier du module est adaptée pour coopérer avec le profil spécifique de l'embase afin de maintenir en position le module, quelles que soient les conditions de roulage.

Ces embases sont réalisées à partir de bandes de mélanges caoutchouteux de faible épaisseur dont le profil présente la particularité de n'avoir aucune partie agressive susceptible de détériorer une membrane de cuisson, et dont la présence sur la surface interne du pneumatique ne modifie pas de manière significative les conditions locales d'échange thermique lors d'une opération de cuisson. Fixée de manière permanente à la surface interne du pneumatique il n'est donc plus nécessaire de procéder au meulage de l'embase en préalable à une opération de rechapage à chaud.

Les avantages et les caractéristiques détaillées de ce type d'embase apparaîtront à la lecture de la présente description et des exemples ou des variantes de réalisation conformément à l'invention, en référence aux schémas et dessins dans lesquels :
- la figure 1 représente une vue schématique simplifiée d'une embase comprenant une semelle et une lanière élastique,
- la figure 2 représente une vue schématique simplifiée d'une embase comprenant une semelle et une lanière élastique dans laquelle un module a été introduit,
- la figure 3 représente une vue de face d'une embase comprenant une semelle et une lanière élastique dans laquelle un module a été introduit,
- les figures 4a et 4b représentent une vue de face et de profil d'un module susceptible de coopérer avec une embase telle que représentée sur les figures 1, 2 et 3,
- la figure 5 représente une vue schématique simplifiée d'une première variante de fixation sur une embase comprenant une variante de réalisation de la semelle et une lanière élastique,
- la figure 6 représente une vue schématique simplifiée d'une deuxième variante de fixation sur une embase comprenant une autre variante de réalisation de la semelle et de la lanière élastique,
- la figure 7 représente une vue schématique simplifiée d'une embase comprenant une semelle et une lanière élastique décomposée en deux sous-parties,
- la figure 8 représente une vue schématique simplifiée d'une embase comprenant une semelle et une lanière élastique décomposée en deux sous-parties dans laquelle un module a été introduit,
- la figure 9 représente une vue de face de l'embase comprenant une semelle et une lanière élastique décomposée en deux sous-parties dans laquelle un module a été introduit,
- les figures 10a et 10b représentent une vue de face et de profil d'un module susceptible de coopérer avec une embase telle que représentée sur les figures 7, 8 et 9,
- la figure 11 représente une vue schématique simplifiée d'une embase permettant une troisième variante de fixation,
- la figure 12 représente une vue schématique simplifiée d'une embase dans laquelle un module a été introduit selon une troisième variante de fixation,
- la figure 13 représente une vue de face de l'embase représentée sur la figure 12,
- les figures 14a et 14b représentent une vue de face et de profil d'un module susceptible de coopérer avec une embase telle que représentée sur les figures 11, 12 et 13,
- la figure 15 représente une vue schématique simplifiée d'une embase comprenant une ouverture,
- la figure 16 représente une vue schématique simplifiée d'une embase comportant une ouverture dans laquelle un module a été introduit,
- la figure 17 représente une vue de face d'une embase telle représentée sur la figure 16,
- la figure 18 représente une vue de face d'un module adapté à une embase comportant une ouverture,
- la figure 19 représente une vue de face d'un module adapté à une embase comportant une ouverture et présentant une quatrième variante de fixation,
- La figure 20 représente une vue schématique simplifiée d'un module et d'une embase dont le contour est en forme de zigzag.

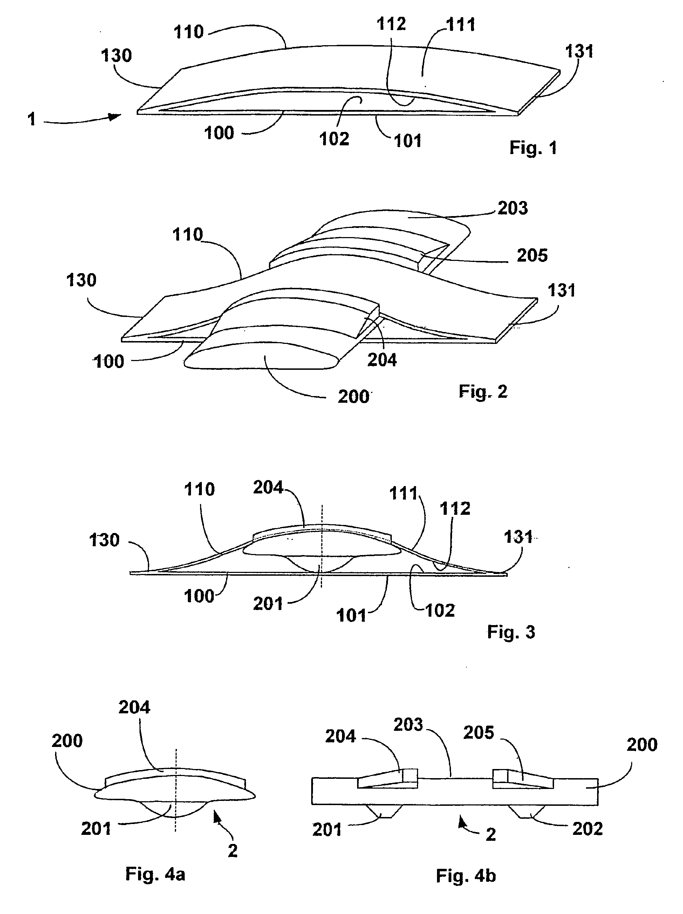

Dans ce qui suit, on désignera par les mêmes références les éléments identiques ou équivalents représentés sur les figures 1 à 20.

L'embase (1) telle que représentée sur la figure 1 est formée d'une semelle (100) et d'une lanière élastique (110) de forme généralement rectangulaire. Ces deux pièces sont liées entre elles sur une partie de leurs contours (130) et (131) de manière à former une bande refermée sur elle-même.

La semelle (100) et la lanière élastique (110) sont formées à partir de pièces de matériau elastomérique de faible épaisseur. En effet il s'avère particulièrement intéressant de réduire autant que faire se peut l'épaisseur totale de l'embase de manière à en minimiser les effets locaux lors de l'opération de rechapage à chaud au cours de laquelle des échanges thermiques sont réalisés par l'intermédiaire de la surface interne du pneumatique à l'intérieur duquel une membrane de cuisson a été préalablement déployée. En pratique, l'épaisseur de la semelle (100) ou de la lanière élastique (110) est inférieure à 5 mm et plus généralement comprise entre 1 et 2 mm.

La semelle (100) est destinée à être liée de manière permanente par sa face d'assemblage (101) à la surface d'un pneumatique. A cette fin elle peut être constituée d'une ou plusieurs couches de matériaux dont les caractéristiques sont adaptées aux conditions d'adhésion entre la semelle (100) et la gomme d'étanchéité du pneumatique et entre la semelle (100) et la lanière élastique (110).

Dans la plupart des cas l'embase est fixée sur la surface intérieure du pneumatique. Mais il peut être envisagé sans difficulté de fixer cette dernière sur une surface externe dudit pneumatique. On déterminera en conséquence la colle ou le mélange caoutchouteux assurant la liaison entre la face d'assemblage de la semelle et la surface du pneumatique. On peut utiliser, à titre d'exemple, une colle silicone. La liaison peut aussi être obtenue par vulcanisation à froid ou à chaud de mélanges caoutchouteux bien connus de l'homme du métier.

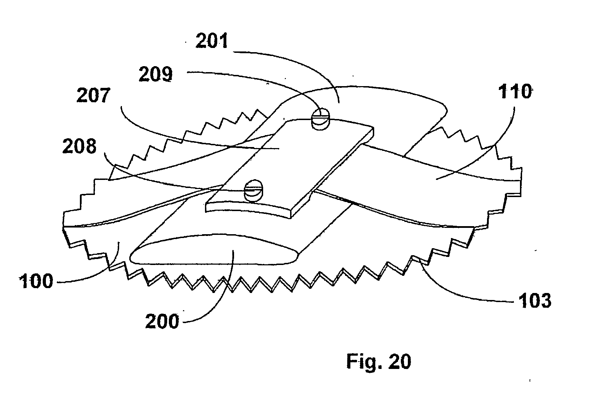

De manière à assurer une meilleure tenue dans le temps du collage entre la face d'assemblage (101) et la surface du pneumatique il est possible de réaliser des festonnages sur le contour de la semelle 100. Ces festonnages peuvent avoir une forme ondulée ou encore en zigzag (103) comme cela est représenté sur la figure 20.

Le module (2) est composé d'un boîtier (200) enfermant tout ou partie d'un composant électronique (non représenté). Le boîtier (200) comprend un dos (203) destiné à collaborer avec la surface interne de la lanière élastique (112), et une base, constituée d'un ou plusieurs pieds (201, 202) destinés à être en contact avec la face d'appui de la semelle (102).

La lanière élastique (110) est destinée à maintenir le boîtier du module (200) préalablement introduit entre la face d'appui de la semelle (102) et la face interne (112) de la lanière élastique (110), tel que représenté sur la figure 2 ou sur la figure 3. On recherchera donc un matériau dont les propriétés élastiques sont adaptées à cette fonction. En pratique, et de manière non limitative, le module élastique de ces matériaux pour une élongation de 10% est généralement compris entre 0,5 Mpa et 5 Mpa. Lors de l'introduction du module dans l'embase, la lanière élastique (100) est mise en tension élastique, et la résultante de ces forces exerce des efforts de rappel sur le dos (203) du boîtier (200) du module afin que les pieds d'appuis (201, 202), tels que représentés sur les figures 3, 4a et 4b, soient en contact permanent avec la face d'appui (102) de la semelle (100).

Le mélange caoutchouteux constituant la lanière (110) sera de préférence résistant au fluage et aux conditions environnementales dans lequel est placée l'embase.

Les expérimentations ont montré que pour obtenir de bons résultats en endurance, on peut utiliser un mélange caoutchouteux d'ancrage contenant au moins un élastomère synthétique de la famille des EPDM, des SBR, des polybutadiènes ou des butyles. Le mélange caoutchouteux contient en plus des charges de renforcement tel du noir de carbone, un système de vulcanisation appropriés pour obtenir la rigidité désirée et les additifs tels des antioxydants en quantité appropriée. Ces mélanges présentent une bonne résistance au fluage ainsi qu'à l'oxydation.

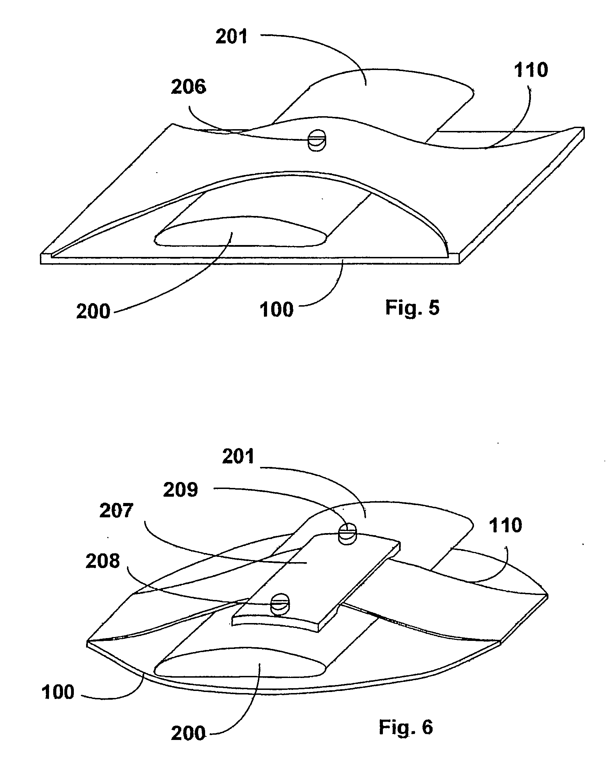

La forme rectangulaire de la semelle ou de la lanière élastique (100) s'avère être la plus commode pour la réalisation et la fixation de la semelle sur la surface interne du pneumatique et introduire le module. Toutefois, sans se départir de l'esprit de l'invention, cette forme peut être adaptée pour répondre à des exigences d'adhérence ou d'encombrement au niveau du point d'adhésion sur la surface interne du pneumatique tel que cela a été illustré sur les figures 5 et 6. Ainsi, la largeur de la lanière élastique (110) peut être inférieure en partie à la largeur de la semelle (100).

Ainsi réalisée, l'embase (1) est susceptible de maintenir un module (2, 3) de forme quelconque. En pratique, il s'avère néanmoins nécessaire d'adapter la forme du boîtier (200) dans laquelle est enserrée la partie électronique proprement dite du module, de manière à assurer le maintien en position de ce dernier, quelles que soient les conditions de roulage du pneumatique. Il convient en effet d'éviter tout risque de sortie du module après que ce dernier ait été introduit entre la face d'appui de la semelle (102) et la face interne de la lanière élastique (112) de l'embase. A cet effet il est possible de disposer des épaulements (204) et (205) sur le dos (203) du corps du module et entre lesquels on disposera la lanière élastique afin d'empêcher toute possibilité de glissement du module en dehors de l'embase. L'écartement entre les deux épaulements sera adapté pour correspondre sensiblement à la largeur de ladite lanière élastique (110) au niveau de la zone de contact entre la lanière élastique (110) et le dos (203) du boîtier (200).

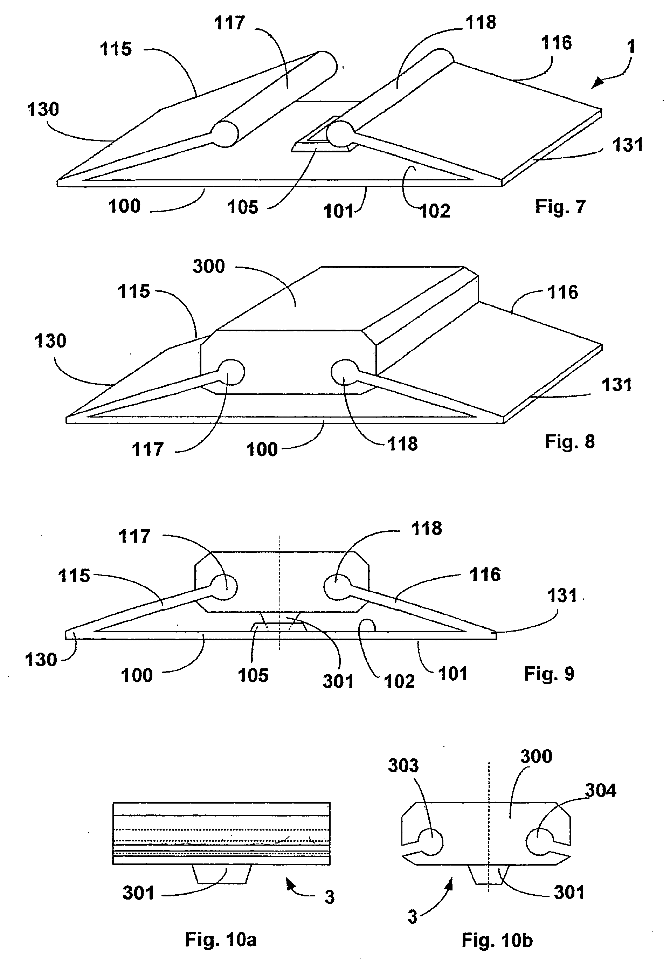

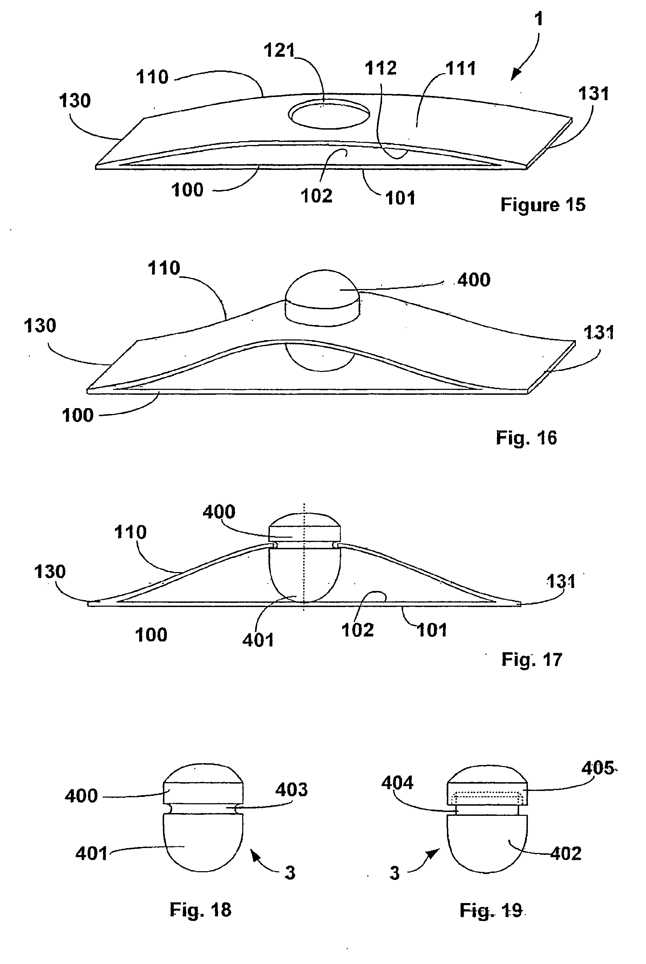

De plus on recherchera à adapter la forme de la base du boîtier du module (200, 300, 400) en contact avec la face d'appui de la semelle (102) de manière à éviter les usures intempestives de ces surfaces de contact dues aux différences de propriétés viscoélastiques entre le boîtier du module et le pneumatique. On fera donc reposer le boîtier du module sur un ou plusieurs pieds d'appuis (201, 202, 301, 302, 401, 402) tels que représentés, à titre d'exemple, sur les figures 3, 4a et 4b, 9, 10a et 10b, 13, 14a et 14b, ou encore sur les figures 17, 18 et 19, et dont la forme sera judicieusement adaptée afin de présenter une surface de contact convexe et peu agressive avec la face d'appui de la semelle (102) ou avec la surface intérieure du pneumatique, quelles que soient, à chaque rotation du pneumatique, les oscillations du module ou les déformations du pneumatique dans la zone où l'embase et le module auront été disposés. En pratique, les variations de courbure de cette surface de contact seront les plus progressives possibles, de manière à ne pas présenter d'arêtes vives ou agressives entraînant des surpressions locales. Le nombre de pieds d'appuis sera de préférence compris entre un (figures 10a, 10b, 14a, 14b, 18, 19) et deux (figures 4a, 4b), de manière à permettre la plus grande indépendance de mouvement du module (2, 3, 4) par rapport au pneumatique en cours d'utilisation.

Il est également possible sans sortir du cadre de l'invention et tout en utilisant une embase comprenant une semelle et une lanière élastique, de supprimer les épaulements (204, 205) et d'assurer la fixation du module de manière différente.

Une première variante de fixation consiste à disposer d'un moyen de fixation amovible. Ce moyen peut être constitué, à titre d'exemple, par une vis (206) traversant la lanière élastique (110) et un filetage aménagé dans le corps du module tel que représenté sur la figure 5.

Une deuxième variante de fixation pourra consister à recouvrir tout ou partie de la face externe (111) de la lanière élastique au niveau de la zone de contact entre le dos (203) du boîtier du module (200) et la lanière élastique (110) à l'aide d'un moyen (207) épousant la forme du boîtier, et maintenu sur ce dernier à l'aide de moyens de fixation amovibles, tels que des vis de fixation (208, 209), et emprisonnant fermement la lanière élastique (110) entre ledit moyen (207) et le dos (203) du boîtier du module tel que représenté sur la figure 6.

On pourra aussi disposer les pieds de maintien (201) et (202) à un écartement tel, qu'ils enserrent la semelle (100) entre leurs points de contact avec la surface interne du pneumatique (non représenté). Toutefois ce mode de réalisation ne permet pas d'assurer un maintien parfait dans le cas où l'on chercherait à minimiser la hauteur de la semelle (100).

Une deuxième variante de réalisation, particulièrement robuste, de la manière de faire coopérer une lanière élastique avec le boîtier du module (3), consiste à réaliser une embase dans laquelle la lanière élastique est décomposée en deux sous parties (115, 116). La semelle (100) a des caractéristiques semblables à celles précédemment décrites. Les deux sous-parties de la lanière élastique, respectivement (115) et (116), sont disposées en vis à vis, et liées à la semelle par une fraction de leurs contours, respectivement (130) et (131) tels que représenté sur la figure 7.

Chacune des deux autres extrémités (117, 118) des deux sous parties de la lanière élastique sont ancrées au boîtier (300) du module (3) de manière à transmettre lesdits efforts de rappel de la lanière (115, 116) au boîtier (300) dudit module.

A titre d'exemple un mode de réalisation de cette variante consiste à disposer un jonc de maintien (117, 118) aux extrémités de chacune des deux sous-parties de la lanière élastique (115) et (116) ; lesdits joncs de maintien (117, 118) sont disposés à l'opposé de la liaison (130, 131) entre la semelle (100) et chacune des sous-parties (115, 116) de la lanière élastique. Le jonc peut avoir une forme cylindrique ou toute autre forme adaptée.

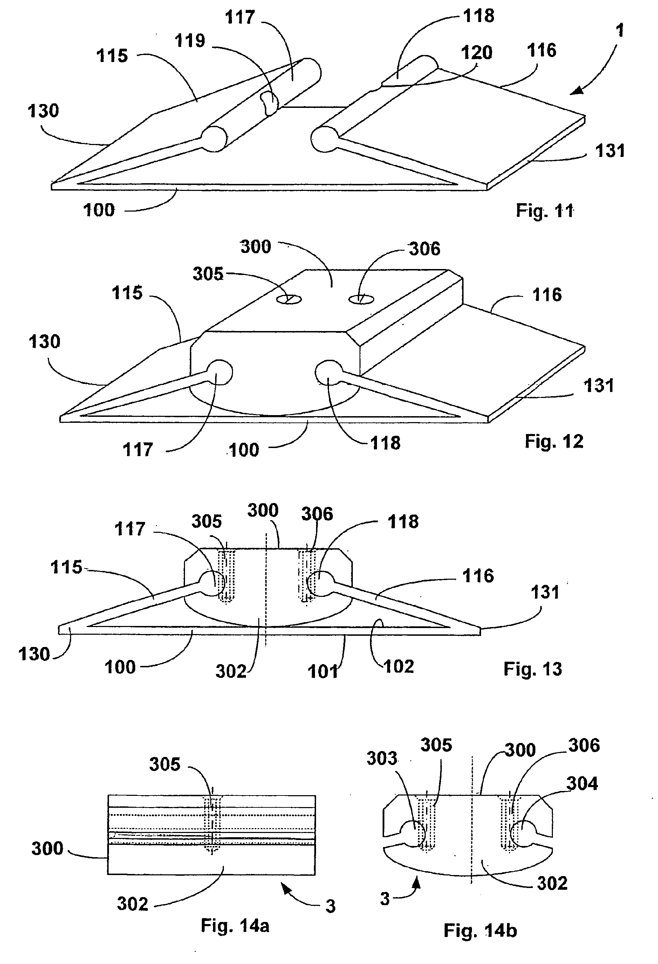

Le boîtier (300) du module (3) comporte deux logements, respectivement (303) et (304) situés latéralement de part et d'autre dudit boîtier et dont le profil est adapté pour recevoir les joncs de maintien (117) et (118) tels que représenté sur les figures 10a, 10b, 14a et 14b. En introduisant les joncs de maintien (117) et (118) dans les logements, respectivement (303) et (304) on assure le maintien du module (300) à l'aplomb de, et au contact de la face d'appui (102) de la semelle (100).

Pour ce faire, on adaptera en conséquence la longueur et l'élasticité des sous-parties de la lanière élastique (115, 116).

Une fois le module monté, les deux sous parties (115 et 116) de la lanière élastique sont mises en tension élastique, et la résultante de ces forces exerce des efforts de rappel, transmis par l'encastrement des joncs de maintien (117, 118) dans les logements (303, 304), sur le boîtier du module, afin que les pieds d'appuis (301, 302), représentés sur les figures 9 et 13, soient en contact permanent avec la face d'appui (102) de la semelle (100).

De manière analogue et pour les mêmes raisons que celles décrites précédemment il est recommandé de disposer un ou plusieurs pieds d'appuis (301, 302) sur la partie du boîtier en contact avec la face d'appui de la semelle ou avec la surface intérieure du pneumatique. Ces pieds d'appuis seront adaptés pour avoir une surface de contact la moins agressive possible.

Il peut aussi s'avérer nécessaire, pour limiter les mouvements du module, de disposer sur la face d'appui (102) de la semelle (100) des reliefs de faible hauteur (105) destinés à coopérer avec les pieds d'appuis (301) et tels que représentés sur les figures 7 ou 9 et empêchant le pied de glisser sur la face d'appui (102) de la semelle. En pratique, la hauteur de ces reliefs (105) n'excède pas 1 à 2 mm. Ce relief (105) peut être réalisé de manière à entourer la zone de contact du pied d'appui comme cela est représenté sur la figure 7 ou la figure 9, mais il peut également prendre la forme d'un bossage (non représenté) de faible hauteur sur lequel vient prendre appui le pied dont la forme en creux, au niveau du point de contact avec la deuxième face (102) de la semelle, correspond à celle du bossage réalisé sur cette dernière.

Il convient de noter que ces dispositions sont applicables quel que soit le type de lanière élastique de l'embase.

Il est également possible dans cette configuration de la lanière élastique, de réaliser une troisième variante de fixation amovible du module. A cet effet, des lumières (119, 120) peuvent être pratiquées sur les joncs de maintien (117, 118) et coopérer avec des vis de fixations (305, 306) disposées dans le corps du module comme cela est représenté sur les figures 11, 12, 13, 14a et 14b.

Une troisième variante de réalisation de la manière de faire coopérer la lanière élastique (1) et le module (4) consiste à pratiquer une ouverture (121) dans la lanière élastique tel que cela est représenté sur la figure 15. Les bords de l'ouverture sont adaptés de manière à enserrer un contour judicieusement choisi du boîtier (400) du module tel que cela est représenté sur les figures 16 et 17. Pour un meilleur maintien du module il est judicieux de prévoir une gorge (403) réalisée dans le boîtier (400) et destinée à recevoir les bords de l'ouverture pratiquée dans la lanière élastique et tel que représenté sur la figure 18. L'introduction du module (4) dans l'ouverture se fait en jouant avec l'élasticité du matériau utilisé pour réaliser la lanière élastique. Une fois le module mis en place, la lanière élastique est mise en tension et maintien fermement le module au niveau de la gorge (403) tout en appliquant sur le module les efforts de rappel nécessaires au maintien du contact entre le pied d'appui (401) du module (400) et la face d'appui (102) de la semelle (100).

La forme circulaire de l'ouverture est donnée ici à titre d'exemple et peut tout aussi bien s'adapter à une forme particulière du boîtier du module.

Un mode de réalisation alternatif consiste à doter le boîtier d'une coiffe amovible (405), qui peut être vissée sur le corps dudit boîtier. Une fois le corps du module mis en place, il est alors possible de fixer le module sur la lanière élastique tel que représenté sur la figure 19, en visant la coiffe (405) sur le corps du boîtier. Cette variante peut s'avérer particulièrement intéressante pour accéder facilement à la batterie d'alimentation du module

Les exemples de mise en oeuvre des principes de l'invention, à savoir les facultés d'une membrane élastique mise en tension à maintenir le module plaqué contre la paroi interne d'un pneumatique, permettront à l'homme de l'art de combiner à sa guise, et sans se départir de l'esprit de ladite invention, chacune des variantes, illustrées dans la description qui précède, de réalisation de la semelle, de la lanière élastique, des pieds de soutien ou des modes de fixation amovibles.

## Revendications

1. Ensemble composé d'un module amovible (2, 3, 4) et d'une embase de fixation (1), destiné à être fixé sur la surface d'un pneumatique dans lequel :
- l'embase de fixation (1) comprend une semelle (100) ayant une face d'assemblage (101) destinée à être liée de manière permanente à la surface du pneumatique et une face d'appui (102), et des moyens de maintien dudit module ; et
- le module (2, 3, 4) comprend au moins un composant et un boîtier (200, 300, 400) dans lequel ledit composant est au moins partiellement engagé ;
**caractérisé en ce que** lesdits moyens de maintien comprennent une lanière élastique (110), située en regard de la face d'appui de la semelle (102), et liée à ladite semelle (100) par deux extrémités opposées de son contour (130, 131) ; et **en ce que** la forme et les dimensions dudit boîtier (200, 300, 400), de ladite semelle (100) et de ladite lanière (110) sont prévues de façon à permettre le placement dudit boîtier (200, 300, 400) selon au moins une position de maintien dans laquelle le boîtier est, dans des conditions normales de fonctionnement du pneumatique, maintenu entre ladite lanière et ladite face d'appui de la semelle (102) par des efforts de rappel élastique développés par ladite lanière élastique.

2. Ensemble selon la revendication 1, dans lequel les efforts de rappel élastique développés par la lanière élastique (110) lorsque le boîtier (200, 300, 400) est mis en place sont tels que ledit boîtier (200, 300, 400) est en contact constant avec la lanière élastique (110) et la face d'appui (102) de la semelle (100) lorsque le pneumatique est utilisé dans des conditions normales de fonctionnement.

3. Ensemble selon l'une des revendications 1 et 2, dans lequel l'embase (1) et le boîtier (200, 300, 400) sont adaptés pour permettre la mise en place dudit module (2, 3, 4,) par insertion entre ladite lanière élastique (110) et ladite face d'appui (102) de la semelle.

4. Ensemble selon la revendication 3, dans lequel le boîtier (200) dudit module comporte un dos destiné, en position de maintien, à être disposé en contact avec la lanière élastique (110) ainsi que des épaulements (204, 205) disposés en vis à vis sur le dos (203) du boîtier du module (200), entre lesquels la lanière élastique (110) est destinée à être placée, et positionnés à un écartement correspondant sensiblement à la largeur de ladite lanière élastique (110) au niveau de la zone de contact entre la lanière élastique (110) et le dos (203) du boîtier du module (200).

5. Ensemble selon l'une des revendications 1 et 2, dans lequel la lanière élastique de l'embase est décomposée en deux sous-parties (115, 116), disposées en vis-à-vis, chacune des sous parties étant liée par une des ses extrémités (130, 131) à la semelle (100) et ancrée au boîtier (300) du module par son autre extrémité (117, 118), de manière à transmettre lesdits efforts de rappel de la lanière (115, 116) au boîtier (300) dudit module.

6. Ensemble selon la revendication 5 dans lequel l'ancrage des lanières (115, 116) sur le boîtier (300) du module est assuré par des joncs de maintien (117, 118) disposés aux extrémités des deux sous parties, et introduits dans des gorges (303, 304) disposées sur le boîtier du module (300).

7. Ensemble selon l'une des revendications 1 et 2, dans lequel la lanière élastique (110) de l'embase (1) comporte une ouverture (121) permettant d'enserrer un contour (403, 404) du boîtier du module.

8. Ensemble selon la revendication 7, dans lequel le boîtier dudit module comporte une gorge (403), sur l'un de ses contours, destinée à recevoir le bord de l'ouverture (121) pratiquée dans la lanière élastique (110).

9. Ensemble selon l'une quelconque des revendications 1 à 8, dans lequel, ledit boîtier (300) dudit module comporte une base avec des pieds d'appui (301), destinés à être en contact avec la face d'appui (102) de la semelle (100), et dans lequel ladite semelle comporte sur sa face d'appui (102) un ou plusieurs reliefs de faible hauteur (105) destinés à coopérer avec lesdits pieds d'appuis (301) situés sur la base du boîtier du module.

10. Ensemble selon la revendication 9, dans lequel lesdits pieds d'appui (201, 202, 301, 302, 402) de la base du boîtier (200, 300, 400) du module (1) ont une surface convexe présentant une courbure progressive.

11. Ensemble selon l'une des revendications 1 à 10, dans lequel la largeur de la lanière élastique (110) de ladite embase est inférieure en partie à la largeur de la semelle (100).

12. Ensemble selon l'une des revendications 1 à 11, dans lequel l'embase de fixation (1) comporte un moyen de blocage (206, 207, 208, 209, 305, 306) de la lanière élastique sur le dos du boîtier (200, 300, 400) du module.

13. Ensemble selon la revendication 12, dans lequel le moyen de blocage est constitué d'au moins une vis (208, 209, 305, 306).

14. Ensemble selon l'une quelconque des revendications 1 à 13, dans laquelle la semelle (100) et les lanières élastiques (110, 115, 116) sont formées à partir d'une pièce de matériau élastomère d'une épaisseur inférieure à 5 mm.

15. Ensemble selon l'une quelconque des revendications 1 à 13, dans lequel la semelle (100), et les lanières élastiques (110, 115, 116) sont formées à partir d'une pièce de matériau élastomère d'une épaisseur inférieure à 2 mm.

16. Ensemble selon l'une quelconque des revendications 1 à 15, dans lequel le matériau élastomère constituant d'au moins la lanière élastique de l'embase est un mélange caoutchouteux comportant au moins un élastomère synthétique choisi dans le groupe des EPDM, des SBR, des polybutadiènes ou des butyles.

17. Ensemble selon l'une des revendications 1 à 16, dans lequel le contour extérieur de la semelle (100) est ondulé.

18. Ensemble selon l'une des revendications 1 à 17, dans lequel le contour extérieur de la semelle (100) est en forme de zigzag (103).

19. Module (2, 3, 4) destiné à constituer avec une embase de fixation (1) un ensemble selon l'une des revendications 1 à 18.

20. Embase de fixation (1) destinée à constituer avec un module (2, 3, 4) un ensemble selon l'une des revendications 1 à 18.

21. Pneumatique comportant sur l'une de ses surfaces un ensemble selon l'une des revendications 1 à 18.

## Claims

1. An assembly composed of a removable module (2, 3, 4) and a fixing base (1), this assembly being intended to be fixed to the surface of a tyre, in which:
- the fixing base (1) comprises a sole plate (100) having a mounting face (101) intended to be permanently connected to the surface of the tyre and a bearing face (102), and means of holding the said module in place; and
- the module (2, 3, 4) comprises at least one component and a casing (200, 300, 400) in which the said component at least partially engages;
**characterised in that** the said means of holding in place comprise a resilient strap (110) located opposite the bearing face (102) of the sole plate and connected to the said sole plate (100) by two opposite ends of its contour (130, 131); and **in that** the shape and dimensions of the said casing (200, 300, 400), the said sole plate (100) and the said strap (110) are provided such that it is possible to position the said casing (200, 300, 400) in at least one position of holding in place in which the casing is, under normal operating conditions of the tyre, held in place between the said strap and the said bearing face (102) of the sole plate by resilient restoring forces developed by the said resilient strap.

2. An assembly according to Claim 1, in which the resilient restoring forces developed by the resilient strap (110) when the casing (200, 300, 400) is put in position are such that the said casing (200, 300, 400) is in constant contact with the resilient strap (110) and the bearing face (102) of the sole plate (100) when the tyre is used in normal operating conditions.

3. An assembly according to Claims 1 and 2, in which the base (1) and the casing (200, 300, 400) are adapted to allow the said module (2, 3, 4) to be put in position by insertion between the said resilient strap (110) and the said bearing face (102) of the sole plate.

4. An assembly according to Claim 3, in which the casing (200) of the said module includes a back intended, when it is in the holding position, to be in contact with the resilient strap (110) and shoulders (204, 205) which are disposed facing one another on the back (203) of the casing (200) of the module, between which the resilient strap (110) is intended to be positioned, and are placed at a spacing corresponding substantially to the width of the said resilient strap (110) in the zone of contact between the resilient strap (110) and the back (203) of the casing (200) of the module.

5. An assembly according to either of Claims 1 or 2, in which the resilient strap of the base is divided into two sub-parts (115, 116) which are disposed facing one another, each of the sub-parts being connected to the sole plate (100) by one of its ends (130, 131) and anchored to the casing (300) of the module by its other end (117, 118) so that the said restoring forces of the strap (115, 116) are transmitted to the casing (300) of the said module.

6. An assembly according to Claim 5, in which the anchoring of the straps (115, 116) to the casing (300) of the module is ensured by holding rods (117, 118) disposed at the ends of the two sub-parts, with the holding rods (117, 118) introduced into grooves (303, 304) in the casing (300) of the module.

7. An assembly according to either of Claims 1 or 2, in which the resilient strap (110) of the base (1) has an opening (121) allowing a contour (403, 404) of the casing of the module to be clasped.

8. An assembly according to Claim 7, in which the casing of the said module has a groove (403) on one of its contours which is intended to receive the edge of the opening (121) made in the resilient strap (110).

9. An assembly according to any one of Claims 1 to 8, in which the said casing (300) of the said module has a base with bearing feet (301) which are intended to be in contact with the bearing face (102) of the sole plate (100), and in which the said sole plate has on its bearing face (102) one or more slightly elevated portions (105), intended to cooperate with the said bearing feet (301), located on the underside of the casing of the module.

10. An assembly according to Claim 9, in which the said bearing feet (201, 202, 301, 302, 402) of the underside of the casing (200, 300, 400) of the module (1) have a convex surface with a progressive curvature.

11. An assembly according to one of Claims 1 to 10, in which the width of the resilient strap (110) of the said base is smaller in some parts than the width of the sole plate (100).

12. An assembly according to one of Claims 1 to 11, in which the fixing base (1) has a means of immobilising (206, 207, 208, 209, 305, 306) the resilient strap on the back of the casing (200, 300, 400) of the module.

13. An assembly according to Claim 12, in which the means of immobilising is in the form of a screw (208, 209, 305, 306).

14. An assembly according to any one of Claims 1 to 13, in which the sole plate (100) and the resilient straps (110, 115, 116) are formed from a piece of elastomer material which is less than 5 mm thick.

15. An assembly according to any one of Claims 1 to 13, in which the sole plate (100) and the resilient straps (110, 115, 116) are formed from a piece of elastomer material which is less than 2 mm thick.

16. An assembly according to any one of Claims 1 to 15, in which the elastomer material forming at least the resilient strap of the base is a rubber mix including at least one synthetic elastomer selected from the group comprising EPDMs, SBRs, polybutadienes or butyls.

17. An assembly according to one of Claims 1 to 16, in which the external contour of the sole plate (100) is undulating.

18. An assembly according to one of Claims 1 to 17, in which the external contour of the sole plate (100) is of a zigzag shape (103).

19. A module (2, 3, 4) intended to form, with a fixing base (1), an assembly according to one of Claims 1 to 18.

20. A fixing base (1) intended to form, with a module (2, 3, 4), an assembly according to one of Claims 1 to 18.

21. A tyre having on one of its surfaces an assembly according to one of Claims 1 to 18.

## Patentansprüche

1. Einheit aus einem abnehmbaren Modul (2, 3, 4) und einer Befestigungs-Fußplatte (1), die an der Fläche eines Reifens befestigt wird und bei der
- die Befestigungs-Fußplatte (1) eine Sohle (100) mit einer Montagefläche (101), die permanent mit der Fläche eines Reifens verbunden wird, und eine Auflagefläche (102) sowie Mittel zum Halten des Moduls aufweist;
- das Modul (2, 3, 4) mindestens eine Komponente und ein Gehäuse (200, 300, 400) aufweist, in das die Komponente zumindest teilweise eingefügt ist;
**dadurch gekennzeichnet, dass** die Haltemittel einen elastischen Riemen (110) aufweisen, welcher der Auflagefläche (102) der Sohle gegenüberliegt und mit der Sohle (100) an zwei gegenüberliegenden Enden (130, 131) seiner Kontur verbunden ist, und **dadurch**, dass Form und Abmessungen des Gehäuses (200, 300, 400), der Sohle (100) und des Riemens (110) derart gewählt sind, dass das Gehäuse (200, 300, 400) in mindestens einer Halteposition platziert werden kann, in der das Gehäuse unter normalen Betriebsbedingungen des Reifens zwischen dem Riemen und der Auflagefläche (102) der Sohle durch elastische Rückstellkräfte des elastischen Riemens gehalten wird.

2. Einheit nach Anspruch 1, bei der die elastischen Rückstellkräfte, die der elastische Riemen (110) ausübt, wenn das Gehäuse (200, 300, 400) eingesetzt ist, derart sind, dass sich das Gehäuse (200, 300, 400) in ständigem Kontakt mit dem elastischen Riemen (110) und der Auflagefläche (102) der Sohle (100) befindet, wenn der Reifen unter normalen Betriebsbedingungen verwendet wird.

3. Einheit nach Anspruch 1 oder 2, bei der die Fußplatte (1) und das Gehäuse (200, 300, 400) so ausgelegt sind, dass sie das Einsetzen des Moduls (2, 3, 4) durch Einfügen zwischen dem elastischen Riemen (110) und der Auflagefläche (102) der Sohle ermöglichen.

4. Einheit nach Anspruch 3, bei der das Gehäuse (200) des Moduls einen Rücken, der sich in der Halteposition in Kontakt mit dem elastischen Riemen (110) befindet, sowie einander gegenüberliegende Schultern (204, 205) auf dem Rücken (203) des Modulgehäuses (200) aufweist, zwischen denen der elastische Riemen (110) platziert wird und die in einem Abstand positioniert sind, der im Wesentlichen der Breite des elastischen Riemens (110) im Kontaktbereich zwischen dem elastischen Riemen (110) und dem Rücken (203) des Modulgehäuses (200) entspricht.

5. Einheit nach Anspruch 1 oder 2, bei der der elastische Riemen der Fußplatte in zwei einander gegenüberliegende Unterabschnitte (115, 116) geteilt ist, die jeweils mit einem ihrer Enden (130, 131) mit der Sohle (100) verbunden und mit ihrem anderen Ende (117, 118) am Gehäuse (300) des Moduls derart verankert sind, dass die Rückstellkräfte des Riemens (115, 116) auf das Modulgehäuse (300) übertragen werden.

6. Einheit nach Anspruch 5, bei der die Riemen (115, 116) durch Halteringe (117, 118) am Modulgehäuse (300) verankert werden, die an den Enden der beiden Unterabschnitte angeordnet und in Hälse (303, 304) am Modulgehäuse (300) eingefügt sind.

7. Einheit nach Anspruch 1 oder 2, bei der der elastische Riemen (110) der Fußplatte (1) eine Öffnung (121) aufweist, die eine Kontur (403, 404) des Modulgehäuses einschließen kann.

8. Einheit nach Anspruch 7, bei der das Modulgehäuse einen Hals (403) an einem seiner Konturen aufweist, der den Rand der Öffnung (121) im elastischen Riemen (110) aufnehmen kann.

9. Einheit nach einem der Ansprüche 1 bis 8, bei der das Modulgehäuse (300) eine Basis mit Auflagefüßen (301) umfasst, die in Kontakt mit der Auflagefläche (102) der Sohle (100) stehen, und bei der die Sohle an ihrer Auflagefläche (102) eines oder mehrere Reliefs (105) geringer Höhe aufweist, die mit den Auflagefüßen (301) an der Basis des Modulgehäuses zusammenwirken.

10. Einheit nach Anspruch 9, bei der die Auflagefüße (201, 202, 301, 302, 402) der Basis des Gehäuses (200, 300, 400) des Moduls (1) eine konvexe Fläche mit progressiver Wölbung besitzen.

11. Einheit nach einem der Ansprüche 1 bis 10, bei der der elastische Riemen (110) der Fußfläche teilweise weniger breit ist als die Sohle (100).

12. Einheit nach einem der Ansprüche 1 bis 11, bei der die Befestigungs-Fußfläche (1) ein Mittel zum Feststellen (206, 207, 208, 209, 305, 306) des elastischen Riemens auf dem Rücken des Modulgehäuses (200, 300, 400) aufweist.

13. Einheit nach Anspruch 12, bei der das Feststellmittel aus mindestens einer Schraube (208, 209, 305, 306) besteht.

14. Einheit nach einem der Ansprüche 1 bis 13, bei der die Sohle (100) und die elastischen Riemen (110, 115, 116) aus einem Elastomerteil von einer Dicke unter 5 Millimeter gebildet sind.

15. Einheit nach einem der Ansprüche 1 bis 13, bei der die Sohle (100) und die elastischen Riemen (110, 115, 116) aus einem Elastomerteil von einer Dicke unter 2 Millimeter gebildet sind.

16. Einheit nach einem der Ansprüche 1 bis 15, bei der das Elastomermaterial, das zumindest den elastischen Riemen der Fußplatte bildet, eine Kautschukmischung mit mindestens einem synthetischen Elastomer aus der Gruppe der EPDM, der SBR, der Polybutadiene oder der Butylkautschuke ist.

17. Einheit nach einem der Ansprüche 1 bis 16, bei der die äußere Kontur der Sohle (100) gewellt ist.

18. Einheit nach einem der Ansprüche 1 bis 17, bei der die äußere Kontur der Sohle (100) zickzackförmig (103) ist.

19. Modul (2, 3, 4), das zusammen mit einer Befestigungs-Fußfläche (1) eine Einheit nach einem der Ansprüche 1 bis 18 bildet.

20. Befestigungs-Fußfläche (1), die zusammen mit einem Modul (2, 3, 4) eine Einheit nach einem der Ansprüche 1 bis 18 bildet.

21. Reifen, der an einer seiner Flächen eine Einheit nach einem der Ansprüche 1 bis 18 aufweist.
